# EUROPEAN PATENT APPLICATION

(11) **EP 4 817 902 A1**
(43) Date of publication of application: **07.10.2026**
(21) Application number: 24895845.6
(22) Date of filing: 03.09.2024
(51) Int. Cl.: B60H 1/00, F24F 11/32, F24F 11/64

(54) **AIR CONDITIONER CONTROL METHOD AND RELATED DEVICE**

(30) Priority: 30.11.2023 CN 202311638446
(71) Applicant: BYD Company Limited, Shenzhen, Guangdong 518118 (CN)
(72) Inventor: LIU, Zhidong, Shenzhen, Guangdong 518118 (CN); ZHANG, Jingke, Shenzhen, Guangdong 518118 (CN); LIU, Gongzheng, Shenzhen, Guangdong 518118 (CN); HUANG, Xianhui, Shenzhen, Guangdong 518118 (CN); MENG, Xiangting, Shenzhen, Guangdong 518118 (CN)
(74) Representative: Mathys & Squire
(86) International application number: PCT/CN2024/116464
(87) International publication number: WO 2025/112746

(57) **Abstract**

An air conditioning control method and a related apparatus are provided. The method includes: obtaining a fault type of an air conditioner; obtaining, when the fault type is a non-compressor hardware fault, a target operating parameter matching an operating state from a preset database; and controlling, based on the target operating parameter, the air conditioner to run.

## Description

This application claims priority to Chinese Patent Application No. 202311638446.2, filed with the China National Intellectual Property Administration on November 30, 2023, and entitled "AIR CONDITIONING CONTROL METHOD AND RELATED APPARATUS", which is incorporated herein by reference in its entirety.

### TECHNICAL FIELD

This application relates to the technical field of air conditioners, and in particular, to an air conditioning control method and a related apparatus.

### BACKGROUND

As a temperature control center of the passenger compartment of a vehicle, an air conditioner can provide a cooling/heating function for the entire vehicle, thereby improving human comfort. Air conditioners are widely used and the technologies are rapidly developing, and therefore stable and reliable design of an air conditioning system is increasingly important.

Operation of the air conditioner requires collecting a plurality of sensor signals in the vehicle and determining a working mode based on an algorithm to output an execution parameter. When one or more of the collected signals are abnormal, a compressor generally shuts down, that is, the cooling/heating function fails. In some air conditioning systems equipped with a positive temperature coefficient (PTC) thermistor heater, when there is a problem with the collected data and the system is in a heating working mode, the compressor stops working and the PTC is enabled to maintain the heating function of the system.

Current air conditioning systems generally adopt a shutdown processing method in case of any fault, which cannot provide continuous cooling and heating functions, thereby failing to meet user requirements.

### SUMMARY

Embodiments of this application provide an air conditioning control method and a related apparatus.

According to a first aspect, an embodiment of this application provides an air conditioning control method, including: obtaining a fault type of an air conditioner; obtaining, when the fault type of the air conditioner is a non-compressor hardware fault, a target operating parameter matching an operating state from a preset database; and controlling, based on the target operating parameter, the air conditioner to run.

It will be understood that, in this embodiment of this application, when the fault type of the air conditioner is the non-compressor hardware fault, the target operating parameter matching the operating state is obtained from the preset database, so that the air conditioner continues to run based on the target operating parameter. Therefore, implementing this embodiment of this application avoids shutdown processing in a case of any fault, and meets cooling and heating requirements of a user as much as possible.

Based on the first aspect, in a possible implementation, the preset database includes a plurality of sets of operating parameters matching a plurality of operating states.

Based on the first aspect, in a possible implementation, the plurality of sets of operating parameters are obtained by training based on sample data, and the sample data includes a plurality of sets of sample operating parameters in the plurality of operating states.

Based on the first aspect, in a possible implementation, the obtaining, when the fault type of the air conditioner is a non-compressor hardware fault, a target operating parameter matching an operating state from a preset database includes: inputting data representing the operating state into the preset database, and obtaining the target operating parameter, where the data representing the operating state includes a non-abnormal signal in signals collected by a plurality of sensors, and the target operating parameter includes any one or more of a rotational speed of a compressor, a valve opening of the compressor, and a circulating air volume.

It will be understood that, in this embodiment of the application, by adding the database, the target operating parameter can still be obtained for the case that the fault type is the non-compressor hardware fault. The air conditioner is adjusted based on the target operating parameter, thereby achieving a purpose of cooling or heating, meeting a user requirement, and improving usage experience of a user.

Based on the first aspect, in a possible implementation, the signals collected by the plurality of sensors further include an abnormal signal, and the obtaining a fault type of an air conditioner includes: determining, when the abnormal signal includes at least one of a current signal, a voltage signal, and a chip temperature of the compressor, that the fault type of the air conditioner is a compressor hardware fault; and determining, when the abnormal signal does not include any one of a current signal, a voltage signal, and a chip temperature of the compressor, that the fault type of the air conditioner is the non-compressor hardware fault.

Based on the first aspect, in a possible implementation, the non-compressor hardware fault includes a fault in a suction and discharge system of the compressor, and when the abnormal signal includes a suction and discharge pressure and/or a suction and discharge temperature of the compressor, the abnormal signal indicates the fault in the suction and discharge system of the compressor.

Based on the first aspect, in a possible implementation, the method further includes: stopping, when the fault type of the air conditioner is the compressor hardware fault, the compressor from working; and performing different ventilation operations on the air conditioner in a working mode of the compressor before the compressor stops working, where the working mode of the compressor includes a cooling mode and a heating mode.

It will be understood that, in this embodiment of this application, when the fault type is the compressor hardware fault, the compressor is stopped from working based on safety considerations, and when the air conditioner loses a cooling/heating function, differentiated ventilation operations are performed based on different current working modes. Therefore, implementing this embodiment of this application can improve user comfort to some extent and provide the user with a good experience when the cooling/heating function of the air conditioner fails.

Based on the first aspect, in a possible implementation, the method further includes: displaying fault information on a dashboard of a vehicle.

It will be understood that, in this embodiment of this application, after the air conditioner identifies a fault and performs corresponding logical determining processing, a specific type of a system fault is also displayed on the dashboard to remind, in time, the user to repair. Therefore, implementing this embodiment of this application to refine a classification of fault types and display specific fault type information on the dashboard helps improve repair efficiency, speed up repair progress, and reduce fault processing time.

According to a second aspect, an embodiment of this application provides a controller, including an obtaining module and a control module. The obtaining module is configured to: obtain a fault type of an air conditioner; obtain, when the fault type of the air conditioner is a non-compressor hardware fault, a target operating parameter matching an operating state from a preset database. The control module is configured to control, based on the target operating parameter, the air conditioner to run.

Based on the second aspect, in a possible implementation, the preset database includes a plurality of sets of operating parameters matching a plurality of operating states.

Based on the second aspect, in a possible implementation, the plurality of sets of operating parameters are obtained by training based on sample data, and the sample data includes a plurality of sets of sample operating parameters in the plurality of operating states.

Based on the second aspect, in a possible implementation, the obtaining module is configured to: input data representing the operating state into the preset database, and obtain the target operating parameter, where the data representing the operating state includes a non-abnormal signal in signals collected by a plurality of sensors, and the target operating parameter includes any one or more of a rotational speed of a compressor, a valve opening of the compressor, and a circulating air volume.

Based on the second aspect, in a possible implementation, the obtaining module is configured to: determine, when the abnormal signal includes at least one of a current signal, a voltage signal, and a chip temperature of the compressor, that the fault type of the air conditioner is a compressor hardware fault; and determine, when the abnormal signal does not include any one of a current signal, a voltage signal, and a chip temperature of the compressor, that the fault type of the air conditioner is the non-compressor hardware fault.

Based on the second aspect, in a possible implementation, the non-compressor hardware fault includes a fault in a suction and discharge system of the compressor, and when the abnormal signal includes a suction and discharge pressure and/or a suction and discharge temperature of the compressor, the abnormal signal indicates the fault in the suction and discharge system of the compressor.

Based on the second aspect, in a possible implementation, when the fault type of the air conditioner is the compressor hardware fault, the compressor is stopped from working; and different ventilation operations are performed on the air conditioner in a working mode of the compressor before the compressor stops working, where the working mode of the compressor includes a cooling mode and a heating mode.

Based on the second aspect, in a possible implementation, fault information is displayed on a dashboard of a vehicle.

Functional modules in the second aspect are configured to implement the method according to the first aspect and the possible implementations of the first aspect.

According to a third aspect, an embodiment of this application provides an electronic apparatus, including a memory and a processor. The memory is configured to store instructions, and the processor is configured to execute the instructions stored in the memory to implement the method described in the first aspect and in any possible implementation of the first aspect.

According to a fourth aspect, an embodiment of this application provides a non-volatile readable storage medium, including program instructions. When the program instructions are executed by a controller, the controller is caused to perform the method described in the first aspect and in any possible implementation of the first aspect.

According to a fifth aspect, this application provides a computer program product, including program instructions. When the computer program product is executed by a controller, the controller is configured to perform the method described in the first aspect and in any possible implementation of the first aspect. The computer program product may be a software installation package. When the method provided by any possible design of the first aspect needs to be used, the computer program product can be downloaded and executed on the controller to implement the method described in the first aspect and in any possible implementation of the first aspect.

According to a sixth aspect, this application provides an air conditioning system, including a compressor and a controller. The controller is configured to implement the method described in the first aspect and in any possible implementation of the first aspect.

According to a seventh aspect, this application provides a vehicle, including: a controller, where the controller is configured to implement the method described in the first aspect and in any possible implementation of the first aspect; or including an air conditioning system, where the air conditioning system is configured to implement the method described in the first aspect and in any possible implementation of the first aspect.

### BRIEF DESCRIPTION OF DRAWINGS

To describe technical solutions in the embodiments of this application or in the background more clearly, the following describes the accompanying drawings that need to be used in the embodiments of this application or in the background.
FIG. 1 is a schematic flowchart of an air conditioning control method according to this application;
FIG. 2 is a schematic diagram of classification of fault types in an air conditioning control method according to this application;
FIG. 3 is a flowchart of processing in a case of a compressor hardware fault according to this application;
FIG. 4 is a schematic diagram of a structure of a controller according to this application;
FIG. 5 is a schematic diagram of a structure of another controller according to this application; and
FIG. 6 is a schematic diagram of a structure of a vehicle according to this application.

Description of reference signs:
400: Controller; 410: Obtaining module; 420: Control module;
500: Controller; 510: Processor; 520: Communication interface; 530: Memory; 540: Bus;
600: Vehicle; 610: Air conditioner; and 620: Controller.

### DESCRIPTION OF EMBODIMENTS

The following describes embodiments of this application with reference to the accompanying drawings in the embodiments of this application. Clearly, the described embodiments are merely some embodiments but not all the embodiments of this application. Based on the embodiments in this application, all other embodiments obtained by a person of ordinary skill in the art without creative efforts fall within the protection scope of this application.

It will be noted that the terms used in the embodiments of this application are merely for the purpose of describing specific embodiments, and are not intended to limit this application. Singular forms "a/an" and "the" used in the embodiments of this application and the appended claims are also intended to include plural forms, unless the context clearly indicates otherwise. It will also be understood that the term "and/or" as used herein refers to and includes any and all possible combinations of one or more of the associated listed items.

It will be noted that when used in this specification and the appended claims, the term "comprise/include" and any variations thereof are intended to cover non-exclusive inclusion. For example, a system, product, or apparatus including a series of units/devices is not limited to listed units/devices, but may optionally further include unlisted units/devices, or may optionally further include other units/devices inherent to the product or the apparatus.

It will also be understood that the term "if" may be interpreted based on the context as "when", "once", "in response to determining", or "in response to detecting".

The embodiments of this application are introduced, the technical terms used in the embodiments of this application are first introduced.

A positive temperature coefficient (PTC) thermistor heater is a semiconductor resistor with temperature sensitivity, whose resistance value exhibits a step-like increase with a rise of a temperature when a temperature of the semiconductor resistor exceeds a specific temperature (Curie temperature). When a current passes through the PTC, a thermal effect is generated, thereby achieving a purpose of heating.

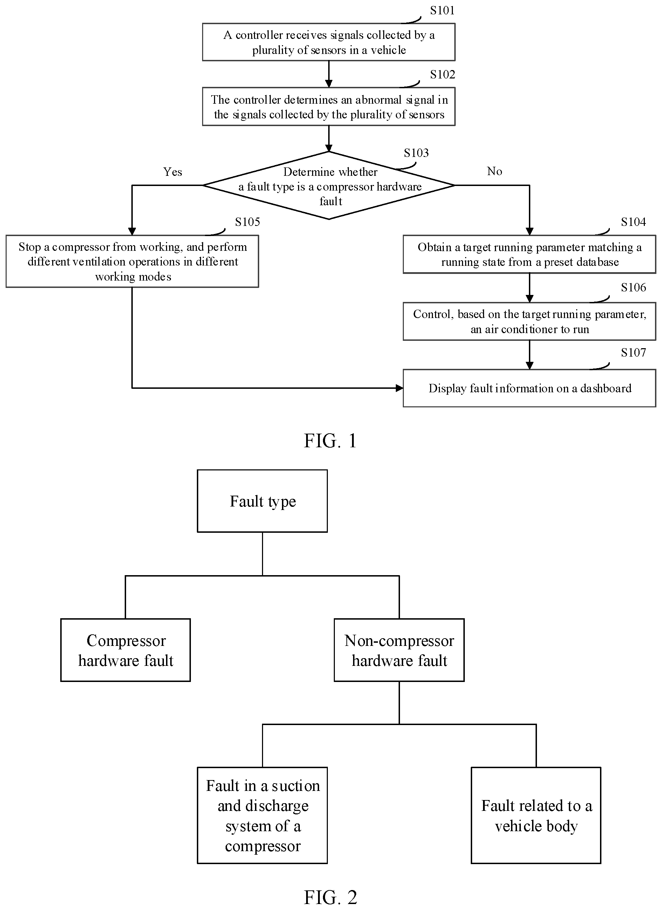

This application provides an air conditioning control method. Referring to FIG. 1, FIG. 1 is a schematic flowchart of an air conditioning control method according to this application. The method includes but is not limited to description of the following content.

S101: a controller receives signals collected by a plurality of sensors in a vehicle.

A plurality of sensors are arranged in the vehicle, and the plurality of sensors include sensors configured to collect signals on compressor hardware, such as a current sensor, a voltage sensor, and a chip temperature sensor. The current sensor can be configured to measure a magnitude of a current flowing through a compressor to monitor a load condition of a motor; the voltage sensor is configured to detect whether a supplied voltage is stable; and the chip temperature sensor can be configured to monitor a temperature of a compressor chip to prevent overheating or overcooling. The plurality of sensors further include a sensor configured to collect a suction and discharge temperature and pressure of the compressor. The sensor can be configured to monitor a suction temperature and a discharge temperature in real time. The plurality of sensors further include sensors configured to collect an air outlet temperature of an air conditioner, an evaporator temperature, and a water-side temperature of a plate heat exchanger. The plurality of sensors may further include other sensors, which are not limited by this application. Other sensors may be, for example, in-vehicle and out-vehicle temperature sensors. An in-vehicle temperature sensor is configured to collect a temperature inside the vehicle, and an out-vehicle temperature sensor is configured to collect an environmental temperature.

After collecting the signals, the plurality of sensors send the collected signals to the controller, and the controller receives the signals collected by the plurality of sensors in the vehicle.

S102: the controller determines an abnormal signal in the signals collected by the plurality of sensors.

The signals collected by the plurality of sensors include an abnormal signal and a non-abnormal signal. The controller identifies a signal value collected by a sensor and determines whether the signal value is abnormal. A case in which the signal value is abnormal includes: the collected signal value exceeding a normal value range and failing to collect valid data for a signal.

An algorithm for determining whether different signal values are abnormal is built into the controller in advance, including the following: A proper parameter range is preset in the controller for different signals. If collected data is beyond this range, the collected data is regarded as abnormal data. Some thresholds used for determining whether data is abnormal may be set in the controller. Based on the setting of the thresholds, if collected data exceeds or falls below the thresholds, it is determined that the collected data is abnormal. For example, if a pressure collected by a pressure sensor exceeds a specified maximum value or falls below a specified minimum value, it is determined that the pressure is abnormal. A threshold for duration of abnormal data may be set in the controller for different signals. If abnormal data exceeds a specific threshold, this is regarded as an abnormality. For example, if an indoor temperature sensor is broken, causing the indoor temperature sensor to fail to collect an indoor temperature for a long time, and if duration exceeds the threshold set by the controller of the air conditioner, a signal value of the indoor temperature is regarded abnormal. An algorithm for determining whether a collected signal value is abnormal is not specifically limited in this application.

S103: determine whether a fault type is a compressor hardware fault.

When determining the signal values collected by the plurality of sensors and detecting that one or more of the signal values are abnormal, the controller identifies a fault type indicated by the signal. Referring to FIG. 2, FIG. 2 is a schematic diagram of classification of fault types in an air conditioning control method according to this application. The fault types include a compressor hardware fault of the air conditioner and a non-compressor hardware fault of the air conditioner, and the non-compressor hardware fault of the air conditioner includes a fault in a suction and discharge system of the compressor, a fault related to a vehicle body, and the like. The compressor hardware fault of the air conditioner refers to a fault in a hardware device related to the compressor. When the hardware device of the compressor is faulty, the compressor cannot normally work, that is, the compressor cannot provide a cooling or heating function. The suction and discharge system of the compressor affects performance of the compressor. When the suction and discharge system of the compressor is normal, the cooling or heating function of the compressor is relatively effective. When the suction and discharge system of the compressor is abnormal or faulty, the cooling or heating function of the compressor is relatively poor. The fault in the suction and discharge system of the compressor includes a fault that occurs when the compressor sucks in and discharges a refrigerant. The fault related to the vehicle body includes a fault in one or more of the plurality of sensors, a fault in a component or a device configured to determine comfort of an in-vehicle environment and regulate an air conditioning system, and the like. Classification of fault types is not specifically limited in this application.

In the controller, an algorithm for identifying a fault type is preset, and this algorithm includes: classifying different signals in the controller. Signals indicating the compressor hardware fault include signals such as a compressor current peak signal, a bus current signal, a bus voltage signal, and a chip temperature signal, and these signals reflect a hardware performance state of the compressor. Signals indicating the fault in the suction and discharge system of the compressor include signals such as a suction and discharge pressure signal and a suction and discharge temperature signal of the compressor. These signals mainly reflect performance of the compressor after the system runs. Signals indicating the fault related to the vehicle body include in-vehicle and out-vehicle temperature signals, an in-vehicle environment humidity signal, air outlet temperature signals for the face and the foot, an evaporator temperature signal, a water-side temperature signal of a plate heat exchanger, and the like. These signals reflect an in-vehicle environment and a vehicle state, and can be used to determine comfort of the in-vehicle environment and regulate an air conditioning function.

When at least one abnormal signal originates from the category of the signals indicating the compressor hardware fault, it is determined to be the compressor hardware fault.

S104: obtain, when the fault type is the non-compressor hardware fault, a target operating parameter matching an operating state from a preset database.

When the fault type of the air conditioner is the non-compressor hardware fault, the target operating parameter matching the operating state is obtained from the preset database. The preset database includes a plurality of sets of operating parameters matching a plurality of operating states, and the plurality of sets of operating parameters are obtained by training based on sample data, and the sample data includes a plurality of sets of sample operating parameters in the plurality of operating states.

When the abnormal signal does not include any one of a current signal, a voltage signal, and a chip temperature, and the abnormal signal does not include a plurality of signals in the current signal, the voltage signal, and the chip temperature, it is determined that the fault type of the air conditioner is the non-compressor hardware fault.

When the fault type of the air conditioner is the non-compressor hardware fault, the target operating parameter matching the operating state is obtained from the preset database, where the target operating parameter refers to a parameter required for the air conditioner to run to meet a user requirement. That the fault type of the air conditioner is the non-compressor hardware fault includes: the abnormal signal indicating the fault in the suction and discharge system of the compressor, and the abnormal signal indicating the fault related to the vehicle body.

The database can be trained by using a neural network model. First, samples are collected. Data samples may be obtained from data collected by the plurality of sensors from the air conditioner actually operating in different working environments, or user operation habit data may be added to the data samples. A label of the neural network model is a target operating parameter corresponding to the data collected by the plurality of sensors from the air conditioner actually operating in different working environments, or a target operating parameter corresponding to the user operation habit data. To facilitate training and use of the neural network model, the data collected by the plurality of sensors from the air conditioner actually operating in different working environments is pre-processed, for example, normalized, standardized, or the like. Second, a dataset is classified into a training set, a validation set, and a test set, with proportions respectively set to 70%, 15%, and 15%. The training set is used to train parameters of the neural network model, the validation set is used to adjust hyperparameters and evaluate performance of the model, and the test set is used for final evaluation of a generalization ability of the model. Proportions of the training set, the validation set, and the test set are not limited in this application. Next, the model is constructed. Based on a requirement, an input layer, a hidden layer, and an output layer are designed, and a quantity of nodes and an activation function for each layer are determined. The activation function may be ReLU or Sigmoid. A type of the activation function is not specifically limited in this application. In consideration of complexity of a problem, a quantity of hidden layers can be increased to improve a learning capability and an expressive capability of the model. Finally, the model is trained and optimized. The training set is used for iterative training of the model, and a weight and a bias of the model are updated through a backpropagation algorithm. An appropriate optimization algorithm and an appropriate loss function are selected, and hyperparameters such as a learning rate and a regularization parameter are adjusted based on a result of the validation set. Using the neural network model for training to obtain the database is only an implementation of this application.

The database may alternatively be implemented in a conventional way in which two database tables are established: a parameter table and a user habit table. The parameter table is used to store parameter data for the air conditioner in different working environments. The parameter data includes normal signal values collected by the plurality of sensors when the air conditioner works in different environments and target operating parameters corresponding to the normal signal values. The user habit table is used to store user operation habit data in daily life and a target operating parameter corresponding to the user operation habit data. Data in the database may be updated periodically or updated in real time. Periodic updating means periodically updating the database, and making a replacement and supplement based on new data to ensure that the data in the database can reflect a current situation. Real-time updating means that during operating, the data in the database can be dynamically updated based on data collected in real time to maintain accuracy and practicality of the database. A method in which the database is created is not specifically limited in this application.

When the fault type of the air conditioner is the non-compressor hardware fault, the preset database is invoked, and a non-abnormal signal value in signals collected by a current plurality of sensors is input. The non-abnormal signal value represents an operating state, which matches data in the database that is similar to a current working environment of the air conditioner, and the target operating parameter is output. The output target operating parameter includes a rotational speed of the compressor, a valve opening of the compressor, a circulating air volume, or a circulation ratio. By regulating the rotational speed of the compressor, a flow rate and a compression ratio of a refrigerant in circulation can be controlled, thereby affecting a cooling or heating effect of the entire system. Different rotational speeds correspond to different cooling/heating capacity levels, and a most appropriate rotational speed can be selected based on an indoor temperature and a user requirement. A valve of the air conditioner is configured to control a flow rate and a flow direction of the refrigerant. Regulating an opening of the valve can change a flow ratio between a refrigerant entering a room and a refrigerant out of the room, thereby regulating a cooling/heating effect. A relatively large valve opening generally corresponds to a relatively large cooling capacity, and a relatively small valve opening corresponds to a relatively small cooling capacity. The valve opening can further be used to finely adjust the flow rate of the refrigerant to adapt to different indoor temperature changes and user requirements. The circulating air volume refers to a volume of air supplied and returned in the air conditioner. Regulating the circulating air volume can change a flow speed and a temperature distribution of indoor air, thereby affecting indoor comfort. A relatively large circulating air volume can accelerate flow of indoor air, making a temperature of an entire room more uniform; and a relatively small circulating air volume can reduce the flow of the indoor air, and is suitable for maintaining temperature stability in a specific region. The circulation ratio refers to a proportion of a refrigerant in the air conditioner in circulation, and indicates an extent to which the refrigerant is recovered and reused in circulation. A higher circulation ratio means that more refrigerants are recovered and reused, thereby improving energy efficiency and performance.

In an embodiment, signals that the controller can obtain include: whether signal values of signals such as an in-vehicle temperature signal, an out-vehicle temperature signal, a working mode signal, and a current signal, a voltage signal, a chip temperature signal of the compressor are abnormal. When a channel temperature signal is abnormal, the target operating parameter derived based on a conventional logical operation of the system may not be accurate, and a compressor shutdown may be caused in a severe case, making a cooling function of the air conditioner fail and affecting user experience. In this case, a built-in database of the air conditioner can be invoked, and normal signals collected by a current plurality of sensors are input, such as the in-vehicle temperature signal, the out-vehicle temperature signal, and the cooling mode signal. Data in the database that is similar to a current working environment is matched and target operating parameters such as a compressor rotational speed of 2000 rpm, a circulating air volume of 50 CFM, or a valve opening of 150 steps are output, so that when the channel temperature signal of the air conditioner is abnormal, it can be ensured that a cooling capacity of the air conditioner can still be retained to some extent while the air conditioner normally runs, where rpm is an abbreviation for "revolutions per minute", which means "revolution/minute"; and CFM is an abbreviation for "cubic feet per minute", which means "cubic feet/minute".

In another embodiment, signals that the controller can obtain include: an in-vehicle temperature of 22°C, an out-vehicle temperature of 28°C, a working mode of a cooling mode, air conditioner startup duration of 15 minutes, and no abnormalities in signal values of a current signal, a voltage signal, a chip temperature, and the like of the compressor. When an air outlet temperature signal is abnormal, the controller cannot obtain an actual air outlet temperature. In this case, it is determined that the compressor can normally run, and data is matched and selected from the built-in database of the system to find data closest to an operation habit parameter of a vehicle owner such as in-vehicle and out-vehicle temperatures, the working mode, the air conditioner startup duration, and the target operating parameter such as a compressor rotational speed of 1200 rpm, a circulating air volume of 400 CFM, or a valve opening of 100 steps is output. The database can implement that performance of the air conditioner varies with a quantity of effective signals. Specifically, when more effective signals are collected by the plurality of sensors, the target operating parameter obtained by matching in the database more meets a current actual situation, and performance of the air conditioner is better; and when fewer effective signals are collected by the plurality of sensors, it is more difficult for the controller to determine accuracy of the target operating parameter of the air conditioner. In this case, with stability and safety of the air conditioner considered as a first priority, the compressor is made to work at a relatively low constant value, resulting in relatively low performance of the air conditioner. Although this cannot fully meet system requirements well, this can still retain cooling/heating capacities of the air conditioner to some extent while ensuring normal operating of the air conditioner under an abnormal condition of the air conditioner. The relatively low constant value is generally approximately 20% of a maximum rotational speed that the compressor can provide. The relatively low constant value is not specifically limited in this application.

S105: when the fault type of the air conditioner is the compressor hardware fault, stop the compressor from working, and perform different ventilation operations in different working modes.

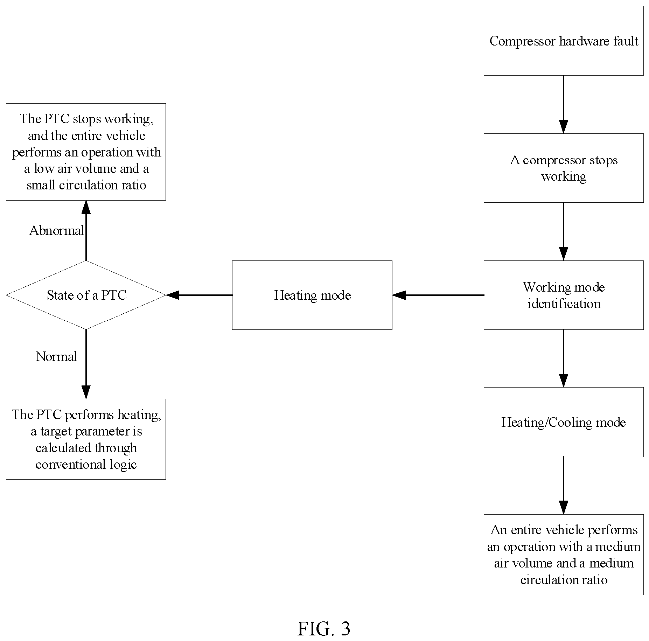

Referring to FIG. 3, FIG. 3 is a flowchart of processing in a case of a compressor hardware fault according to this application. The compressor is a core component of the air conditioning system, and is configured to circulate a refrigerant and provide a cooling/heating function. When a fault occurs in hardware of the compressor, the compressor may be caused to fail to normally operate, which damages other related components, and even affects overall performance and working effect of the air conditioner. Therefore, the compressor stops working. When the compressor stops working, the cooling/heating function fails. To minimize user discomfort, the vehicle needs to be ventilated. Different ventilation operations are required for different working modes to provide a user with a relatively good experience. The working modes include a cooling mode and a heating mode.

After the compressor stops working, there are various methods for determining a working mode of the air conditioner, including: comparing a difference between an indoor temperature and an outdoor temperature to determine a current working mode of the air conditioner. If the indoor temperature is higher than the outdoor temperature, the working mode can be determined as the cooling mode. If the indoor temperature is lower than the outdoor temperature, the working mode can be determined as the heating mode. The air conditioning system generally has corresponding setting parameters for setting circulating air volumes in the cooling mode and the heating mode. After the compressor shuts down, the system can determine the current working mode of the air conditioner by reading or detecting a value of a setting parameter of a circulating air volume. If the setting parameter of the circulating air volume is a relatively large value, the working mode can be determined as the cooling mode; and if the setting parameter of the circulating air volume is a relatively small value, the working mode can be determined as the heating mode. The air conditioner may have a state history recording function, which can record an operating state and an operating mode of the system. After the compressor shuts down, the system can determine a most recent working mode by reading a history record. The controller can infer the current working mode based on most recent several operating states. For example, if the most recent several operating states are all the heating mode, it can be determined that a current state is also the heating mode. Some advanced air conditioners may provide a function to prioritize a user setting. After the compressor shuts down, the system can determine the current working mode by reading a setting parameter of a user. If the user previously sets a preferred working mode (cooling or heating), the setting shall take precedence. A specific method for determining the working mode varies depending on different designs of the air conditioning system. In practical applications, the current working mode of the air conditioner can be determined based on a specific air conditioning system and in combination with a plurality of determining methods, so as to provide accurate operating state feedback and user experience. Determining of the working mode of the air conditioner is not specifically limited in this application.

In the heating mode, the air conditioner can perform heating in two ways: a compressor and a PTC, with the PTC generally used for system auxiliary heating. During a rapid heating phase, the air conditioner needs to rapidly raise a temperature in a passenger compartment. During this phase, the compressor and the PTC work together to perform heating rapidly. The compressor releases heat through compression of a circulating refrigerant, and the PTC rapidly provides additional heat through its own heating to rapidly raise the in-vehicle temperature to a specified value. For example, when the user starts the vehicle and sets a relatively high indoor temperature (such as 25 degrees Celsius), the air conditioner enters the heating mode. In this case, the compressor starts working and releases heat, and the PTC also starts simultaneously, rapidly providing additional heat to the passenger compartment through its own heating. In this way, the compressor and the PTC work together to rapidly raise the temperature in the passenger compartment, thereby improving riding comfort. Once the temperature in the passenger compartment reaches a specified temperature, the system enters a temperature maintenance phase. During this phase, to improve an energy efficiency ratio of the air conditioner and reduce energy consumption of the air conditioner, the PTC gradually reduces a level until being shut off, and heating is performed by using only the compressor. In this case, since the in-vehicle temperature is maintained at a comfortable level, the PTC no longer needs to provide an additional heating capacity, thereby reducing power consumption and energy consumption. For example, when the temperature in the passenger compartment reaches the specified value (such as 25 degrees Celsius), the system enters the temperature maintenance phase. In this case, the PTC gradually reduces the heating level and is eventually shut off. The air conditioner relies only on the compressor to work, and provides a required heating effect by circulating a refrigerant to maintain a comfortable temperature in the vehicle. In this way, energy efficiency of the system is improved, and energy consumption of the PTC is reduced. However, when the compressor is unable to work due to some factors, the PTC restarts to meet a heating requirement of the air conditioner.

In the cooling mode, the air conditioner only uses the compressor for cooling, and when the compressor cannot start due to some factors, the system loses the cooling function.

Ventilation is to introduce out-vehicle air into the vehicle to replace in-vehicle air, thereby achieving a circulating ventilation effect. This effectively removes waste substances such as odors, moisture, and carbon dioxide from the vehicle, thereby maintaining freshness of the in-vehicle air. A ventilation function of the air conditioner is achieved through collaborative work of components such as a blower, an air inlet, and an air outlet. The blower is driven by an electric motor and generates airflow through a rotating impeller, and is generally mounted at a bottom or a top of a dashboard. The air inlet is an entrance for a ventilation system to introduce outside air, and uses a filter to filter incoming air to ensure quality of the in-vehicle air, and is generally located in an engine compartment in the front of the vehicle. The air outlet is an exit in the ventilation system for expelling waste air from the vehicle. Flow direction and flow rate of the air can be regulated by controlling a direction and a speed of the blower. The air outlet is generally mounted in a center of the dashboard or under each seat. Different ventilation operations are performed in cooling and heating modes to meet comfort requirements in different working modes.

When the compressor stops working and the air conditioner determines that the current working mode is the cooling mode, the air conditioner performs a ventilation operation with a medium air volume and a medium circulation ratio considering that a current environment is generally in a relatively hot state. The medium air volume and the medium circulation ratio can promote airflow within a vehicle cabin, allowing the in-vehicle air to better blend with the circulating air, thereby improving air quality in the entire vehicle compartment. Heat transfer and removal can also be enhanced to take away some of in-vehicle heat, thereby lowering the in-vehicle temperature and improving a cooling effect. A reason for not adopting a high air volume and a fully-open circulation is that, although the in-vehicle temperature can be rapidly lowered, a large amount of outdoor air may be introduced, leading to energy waste. A reason for not adopting a low air volume and a small circulation ratio is that the low air volume cannot meet an airflow requirement within the vehicle cabin, and this operation makes it less likely for the user to feel cool in a hot environment. In another embodiment, on a hot summer day, the vehicle is parked outdoors in direct sunlight, with a temperature reaching up to 40 degrees Celsius. The compressor of the air conditioner stops working, and in this case, the air conditioner is in the cooling mode. Based on a ventilation strategy of the air conditioner, an operation with a medium air volume and a medium circulation is performed, with an air supply volume set to 50% and a circulation ratio set to 50%. This operation method can ensure fluidity of air within the vehicle cabin, and lower the in-vehicle temperature while ensuring air quality within the vehicle compartment.

When the compressor stops working and the air conditioner determines that the current working mode is the heating mode, if the air conditioner is not mounted with a PTC, the heating function of the air conditioner fails. Considering that where a current environment is generally in a relatively cold state, the air conditioner performs a ventilation operation with a low air volume and a small circulation ratio. By adopting the operation with a low air volume, a large amount of cold air can be prevented from directly entering the vehicle cabin, thereby avoiding bringing discomfort and a feeling of coldness for a passenger, and a small circulation ratio can maintain a specific level of ventilation in the passenger compartment. A reason for not adopting a high air volume and a fully-open circulation is that this operation method introduces a large amount of outdoor air and accelerate indoor airflow, which may cause strong cold air to blow towards a passenger, thereby affecting comfort of the passenger. A reason for not adopting a medium air volume and a medium circulation ratio is that the medium air volume may still be relatively large, which is likely to send more cold air into the vehicle cabin.

In another embodiment, during a cold winter, the vehicle is parked outdoors, where an environmental temperature is below zero degrees, and the indoor temperature is 10 degrees Celsius. The compressor of the air conditioner stops working, and in this case, the air conditioner is in the heating mode. In this case, based on the ventilation strategy of the air conditioner, an operation with a low air volume and a small circulation ratio operation is performed, with an air supply volume set to 30% and a circulation ratio set to 20%. This operation method can reduce a feeling of coldness in the passenger compartment and improve riding comfort.

When the compressor stops working and the air conditioner determines that the current working mode is the heating mode, if the air conditioner is mounted with a PTC and the PTC can be normally used, heating can be performed through the PTC. The target operating parameter such as a power level of the PTC is output based on conventional logic of the air conditioner, thereby implementing the heating function. If the air conditioner is mounted with a PTC but the PTC cannot be normally used, the heating function of the air conditioner fails. Considering that the current environment is generally in a relatively cold state, the air conditioner performs a ventilation operation with a low air volume and a small circulation ratio. The conventional logic refers to the following: after receiving normal signals from the sensors, the controller uses a specific control algorithm to analyze and determine a value of an output parameter. Commonly used control algorithms include a PID control algorithm and a fuzzy logic control algorithm. A control algorithm is not specifically limited in this application.

In another embodiment, the controller uses the fuzzy logic control algorithm for analysis based on data such as an indoor temperature of 26 degrees Celsius returned by an indoor temperature sensor, an outdoor temperature of 32 degrees Celsius returned by an outdoor temperature sensor, a humidity of 60% returned by a humidity sensor, and a pressure of 3 bar returned by a pressure sensor. Based on the value returned by the indoor temperature sensor, the fuzzy logic control algorithm determines that cooling is required. Based on the values returned by the outdoor temperature sensor and the humidity sensor, the fuzzy logic control algorithm calculates an appropriate air volume and circulation ratio. Based on the value returned by the pressure sensor, the fuzzy logic control algorithm adjusts the opening of the valve. Finally, through calculation, the fuzzy logic control algorithm obtains the target operating parameter: the PTC is set to a level 2, the air volume is 300 CFM, the rotational speed of the compressor is 4500 rpm, the circulation ratio is 60%, and the valve opening is 420 steps.

S106: control, based on the target operating parameter, the air conditioner to run.

The air conditioner is configured based on the target operating parameter, so that the air conditioner can run, thereby meeting a comfort requirement of a user.

S107: display fault information on a dashboard.

In the controller, an algorithm for identifying a fault type is preset. The algorithm has been described in S103. To make the specification as concise as possible, details of the algorithm are not described herein again. After the fault type is identified, the fault information can be indicated on the dashboard. The fault information can be displayed through text, an icon, an indicator light, or the like on an instrument. For example, an instrument display can show a specific fault type such as the "compressor hardware fault" or the "fault in the suction and discharge system of the compressor", or a corresponding icon is used to represent the specific fault type. In addition to displaying the specific fault type on the dashboard, the controller can alternatively alert the user through a voice prompt, a warning light, or the like. For example, when the compressor hardware fault occurs, the dashboard can issue a voice prompt to inform the user that compressor hardware needs to be checked and repaired. Alternatively, a red warning light is used to indicate an urgent fault that requires to immediately handled. To help the user better understand and resolve a fault, the dashboard can alternatively display a fault code and provide a corresponding user manual reference. The fault code is a concise and standardized representation. The user can look up a user manual based on the code to understand a specific fault cause and repair method. A method of prompting the fault information is not specifically limited in this application.

In this application, operations of refining classification of fault types, adding database application to the system, and displaying a specific fault type on the dashboard are performed to ensure, to a maximum extent, implementation of the cooling/heating functions of the air conditioner and accelerate repair efficiency when the air conditioner is faulty. When the compressor/PTC cannot be started and the system loses the cooling/heating function, differentiated processing operations are performed based on different working modes to ensure comfort of a passenger to a maximum extent.

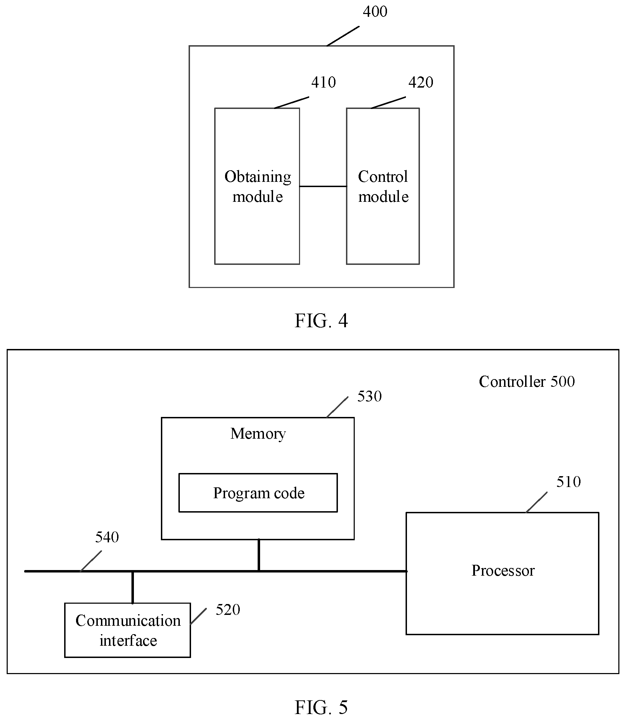

This application provides a controller. Referring to FIG. 4, FIG. 4 is a schematic diagram of a structure of a controller 400 according to this application. The controller 400 may be the controller in the method embodiment of FIG. 1, and the controller 400 includes:
an obtaining module 410, configured to obtain a fault type of an air conditioner, wherein
the obtaining module 410 is configured to obtain, when the fault type of the air conditioner is a non-compressor hardware fault, a target operating parameter matching an operating state from a preset database; and
a control module 420, configured to control the air conditioner to run based on the target operating parameter.

In a possible implementation, the preset database includes a plurality of sets of operating parameters matching a plurality of operating states.

In a possible implementation, the plurality of sets of operating parameters are obtained by training based on sample data, and the sample data includes a plurality of sets of sample operating parameters in the plurality of operating states.

In a possible implementation, the obtaining module 410 is configured to:
input data representing the operating state into the preset database, and obtain the target operating parameter, where the data representing the operating state includes a non-abnormal signal in signals collected by a plurality of sensors, and the target operating parameter includes any one or more of a rotational speed of a compressor, a valve opening of the compressor, and a circulating air volume.

In a possible implementation, the obtaining module 410 is configured to:
determine, when the abnormal signal includes at least one of a current signal, a voltage signal, and a chip temperature of the compressor, that the fault type of the air conditioner is a compressor hardware fault; or
determine, when the abnormal signal does not include any one of a current signal, a voltage signal, and a chip temperature of the compressor, that the fault type of the air conditioner is the non-compressor hardware fault.

In a possible implementation, the non-compressor hardware fault includes a fault in a suction and discharge system of the compressor, and when the abnormal signal includes a suction and discharge pressure and/or a suction and discharge temperature of the compressor, the abnormal signal indicates the fault in the suction and discharge system of the compressor.

In a possible implementation, when the fault type of the air conditioner is the compressor hardware fault, the compressor is stopped from working; and
different ventilation operations are performed on the air conditioner in a working mode of the compressor before the compressor stops working, where the working mode of the compressor includes a cooling mode and a heating mode.

In a possible implementation, fault information is displayed on a dashboard of a vehicle.

Functional modules in FIG. 4 are configured to implement the steps of the method embodiments in FIG. 1 to FIG. 3. For specific details, reference is made to the description of related in the method embodiments in FIG. 1 to FIG. 3. For brevity of the specification, details are not described herein again.

This application further provides a controller. Referring to FIG. 5, FIG. 5 is a schematic diagram of a structure of a controller 500 according to this application. The controller 500 is configured to implement the method embodiments described in FIG. 1 to FIG. 3. The controller 500 includes: a processor 510, a communication interface 520, and a memory 530. The processor 510, the communication interface 520, and the memory 530 may be interconnected through an internal bus 540, or may communicate with each other through other means such as wireless transmission.

In an example in which the processor 510, the communication interface 520, and the memory 530 are connected through the bus 540, the bus 540 may be a peripheral component interconnect (PCI) bus, an extended industry standard architecture (EISA) bus, or the like. The bus 540 may be classified into an address bus, a data bus, a control bus, and the like. For ease of representation, only one thick line is used in FIG. 5 to represent the bus, but this does not indicate that there is only one bus or one type of bus.

The processor 510 may include at least one general-purpose processor, such as a CPU, or a combination of a CPU and a hardware chip. The hardware chip may be an application-specific integrated circuit (ASIC), a programmable logic device (PLD), or a combination thereof. The PLD may be a complex programmable logic device (CPLD), a field-programmable gate array (FPGA), a generic array logic (GAL), or any combination thereof. The processor 510 executes various types of digital storage instructions, such as a software or firmware program stored in the memory 530, and enables the controller 500 to provide a wide range of services.

The memory 530 is configured to store program code, which is controlled and executed by the processor 510 to perform the steps described in the foregoing embodiments of FIG. 1 to FIG. 3. For specific details, reference is made to the related descriptions of the embodiments shown above. Details are not described herein again.

The memory 530 may include a volatile memory, such as RAM; the memory 530 may alternatively include a non-volatile memory, such as ROM, a flash memory; and the memory 530 may alternatively include a combination of the foregoing types.

The communication interface 520 may be a wired interface (such as an Ethernet interface), an internal interface (such as a peripheral component interconnect express (peripheral component interconnect express, PCIE) bus interface), a wired interface (such as an Ethernet interface), or a wireless interface (such as a cellular network interface or a wireless local area network interface), and is used for communication with other devices or modules.

The processor 510, the communication interface 520, and other components in the controller 500 can implement functions and/or various steps and methods described in the foregoing method embodiments. For brevity, details are not described herein. The obtaining module 410 and the control module 420 in the controller 400 may be located in the processor 510 of the controller 500.

It will be noted that FIG. 5 is only a possible implementation of embodiments of this application, and in actual applications, the controller may further include more or fewer components. This is not limited herein. For content not shown or described in this embodiment of this application, reference is made to related descriptions in the embodiments described in the foregoing method. Details are not described herein again.

This application provides an air conditioning system, including a compressor and a controller. The controller may be configured as a controller 400, or may be configured as a controller 500. The controller is configured to implement the method embodiments described in FIG. 1 to FIG. 3.

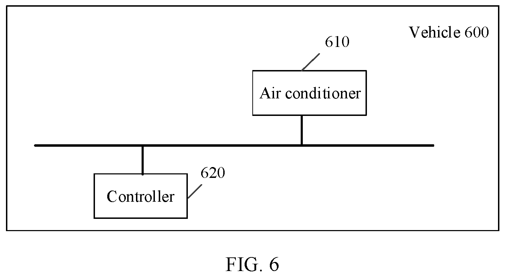

This application provides a vehicle. As shown in FIG. 6, a vehicle 600 includes a controller 620 and an air conditioner 610. The controller 620 and the air conditioner 610 are connected through a bus. The bus may be a peripheral component interconnect (PCI) bus, an extended industry standard architecture (EISA) bus, or the like. The bus may be an address bus, a data bus, a control bus, or the like. This is not limited in this application. The controller may be configured as a controller 400, or may be configured as a controller 500. The controller is configured to implement the method embodiments described in FIG. 1 to FIG. 3.

This application further provides a non-volatile readable storage medium, including program instructions. When the program instructions are executed by a controller, the controller performs some or all of the steps described in the embodiments of the foregoing air conditioning control method.

This application further provides a computer program product, including program instructions. When the program instructions are run by a controller, the controller is caused to perform some or all of the steps described in the embodiments of the foregoing air conditioning control method.

In the foregoing embodiments, descriptions of the embodiments have respective focuses. For a part that is not described in detail in an embodiment, reference is made to related descriptions in other embodiments.

In the foregoing embodiments, all or some of the embodiments may be implemented by software, hardware, or any combination of software and hardware. When implemented by software, all or some of the embodiments may be implemented in a form of a computer program product. The computer program product may include code. When the computer program product is read and executed by a computer, some or all of the steps of the method described in the foregoing method embodiments can be implemented. The computer may be a general-purpose computer, a special-purpose computer, a computer network, or another programmable apparatus. The computer instructions may be stored in a computer-readable storage medium, or transmitted from one computer-readable storage medium to another computer-readable storage medium. For example, the computer instructions can be transmitted from one website, computer, server, or data center to another website, computer, server, or data center through wired (such as coaxial cable, optical fiber, or digital subscriber line) or wireless (such as infrared, radio, or microwaves) means. The computer-readable storage medium may be any available medium that can be accessed by a computer, or a data storage device such as a server or a data center that integrates one or more available media. The available medium may be a magnetic medium (for example, a floppy disk, a hard disk, or a magnetic tape), an optical medium, a semiconductor medium, or the like.

Steps of the method in the embodiments of this application can be sequentially adjusted, combined, or deleted based on actual requirements; and units of the apparatus in the embodiments of this application can be divided, combined, or deleted based on actual requirements.

Embodiments of this application are described in detail above. The principles and implementations of this application are described in this specification by using specific examples. The descriptions of the foregoing embodiments are merely used for helping understand the method and core ideas of this application. In addition, a person of ordinary skill in the art may change a specific implementation and an application scope based on the idea of this application. In summary, content of this specification will not be construed as a limitation on this application.

## Claims

1. An air conditioning control method, comprising:
obtaining a fault type of an air conditioner;
obtaining, when the fault type of the air conditioner is a non-compressor hardware fault, a target operating parameter matching an operating state from a preset database; and
controlling, based on the target operating parameter, the air conditioner to run.

2. The method according to claim 1, wherein the preset database comprises a plurality of sets of operating parameters matching a plurality of operating states.

3. The method according to claim 2, wherein the plurality of sets of operating parameters are obtained by training based on sample data, and the sample data comprises a plurality of sets of sample operating parameters in the plurality of operating states.

4. The method according to any one of claims 1 to 3, wherein obtaining, when the fault type of the air conditioner is the non-compressor hardware fault, the target operating parameter matching an operating state from the preset database comprises:
obtaining the target operating parameter from the preset database based on data representing the operating state, wherein the data representing the operating state comprises a non-abnormal signal in signals collected by a plurality of sensors, and the target operating parameter comprises any one or more of a rotational speed of a compressor, a valve opening of the compressor, and a circulating air volume.

5. The method according to claim 4, wherein the signals collected by the plurality of sensors further comprise an abnormal signal, and obtaining the fault type of the air conditioner comprises:
determining, when the abnormal signal comprises at least one of a current signal, a voltage signal, and a chip temperature signal of the compressor, that the fault type of the air conditioner is a compressor hardware fault; and
determining, when the abnormal signal does not comprise any one of a current signal, a voltage signal, and a chip temperature of the compressor, that the fault type of the air conditioner is the non-compressor hardware fault.

6. The method according to any one of claims 1 to 5, wherein the non-compressor hardware fault comprises a fault in a suction and discharge system of the compressor, and when the abnormal signal comprises a suction and discharge pressure and/or a suction and discharge temperature of the compressor, the abnormal signal indicates the fault in the suction and discharge system of the compressor.

7. The method according to any one of claims 1 to 6, wherein the method further comprises:
stopping, when the fault type of the air conditioner is the compressor hardware fault, the compressor from working; and
performing different ventilation operations on the air conditioner in a working mode of the compressor before the compressor stops working, wherein the working mode of the compressor comprises a cooling mode and a heating mode.

8. The method according to any one of claims 1 to 7, wherein the method further comprises:
displaying fault information on a display apparatus of a vehicle.

9. A controller (400), comprising an obtaining module (410) and a control module (420), wherein
the obtaining module (410) is configured to:
obtain a fault type of an air conditioner; and
obtain, when the fault type of the air conditioner is a non-compressor hardware fault, a target operating parameter matching an operating state from a preset database; and
the control module (420) is configured to:
control, based on the target operating parameter, the air conditioner to run.

10. A controller (500), comprising a memory (530) and a processor (510), wherein the memory (530) is configured to store instructions, and the processor (510) is configured to execute the instructions stored in the memory (530) to implement the method according to any one of claims 1 to 8.

11. An air conditioning system, comprising a compressor and the controller (400) according to claim 9, or comprising the compressor and the controller (500) according to claim 10.

12. A vehicle (600), comprising the controller (400) according to claim 9, the controller (500) according to claim 10, or the air conditioning system according to claim 11.

13. A non-volatile readable storage medium, comprising program instructions, wherein when the program instructions are executed by a controller, the controller is caused to perform the method according to any one of claims 1 to 8.

14. A computer program product, comprising program instructions, wherein when the computer program product is executed by a controller, the controller is caused to perform the method according to any one of claims 1 to 8.
